# EUROPÄISCHE PATENTSCHRIFT

(11) **EP 3 500 831 B1**
(45) Veröffentlichungstag und Bekanntmachung des Hinweises auf die Patenterteilung: **05.08.2020**
(21) Anmeldenummer: 17754665.2
(22) Anmeldetag: 10.08.2017
(51) Int. Cl.: G01K 1/14, G01K 13/08, B02C 4/28

(54) **MESSEINRICHTUNG ZUR ERMITTLUNG DER TEMPERATUR EINER WALZENOBERFLÄCHE EINES WALZENKÖRPERS**
MEASURING DEVICE FOR DETERMINING THE TEMPERATURE OF A ROLLER SURFACE OF A ROLLER BODY
DISPOSITIF DE MESURE PERMETTANT DE DÉTERMINER LA TEMPÉRATURE D'UNE SURFACE DE CYLINDRE D'UN CORPS DE CYLINDRE

(30) Priorität: 19.08.2016 DE 102016215602
(43) Veröffentlichungstag der Anmeldung: 26.06.2019
(73) Patentinhaber: Robert Bosch GmbH, 70442 Stuttgart (DE)
(72) Erfinder: KUNERT, Peter, 72805 Lichtenstein (DE); LUDWIG, Ronny, 72770 Reutlingen (DE); ROSE, Hannes, Shanghai 200335 (CN); FRANK, Holger, 72793 Pfullingen (DE); GARAMOUN, Ahmed, 70565 Stuttgart (DE)
(86) Internationale Anmeldenummer: PCT/EP2017/070322
(87) Internationale Veröffentlichungsnummer: WO 2018/033471

(56) Entgegenhaltungen:
- WO-A1-2014/195309
- WO-A1-2016/017284

## Beschreibung

### Stand der Technik

Die Erfindung geht aus von einer Messeinrichtung zur Ermittlung der Temperatur einer Walzenoberfläche eines Walzenkörpers. Die Messeinrichtung ist in eine Ausnehmung des Walzenkörpers einsetzbar. Die Messeinrichtung weist zudem wenigstens einen ersten Temperatursensor und einen zweiten Temperatursensor auf.

Solch eine Messeinrichtung ist beispielsweise in der Offenlegungsschrift WO 2014/195309 A1 offenbart. In dieser ist eine Leiterplatte offenbart, auf welcher mehrere Sensoren beabstandet zueinander angeordnet sind, um Messwerte über die ganze Länge der Walze ermitteln zu können. Die Messeinrichtung wird hierfür in eine Ausnehmung des Walzenkörpers eingebracht und dort eingespritzt. Als Sensoren können beispielsweise Temperatursensoren dienen, mittels denen Temperaturwerte der Walzenoberfläche erfasst werden können. Anhand der erfassten Temperaturwerte kann beispielsweise die Walzenlagerung überwacht werden oder auch auf Prozessparameter beim Walzvorgang geschlossen werden.

### Offenbarung der Erfindung

Die Erfindung geht aus von einer Messeinrichtung zur Ermittlung der Temperatur einer Walzenoberfläche eines Walzenkörpers. Die Messeinrichtung ist in eine Ausnehmung des Walzenkörpers einsetzbar. Die Messeinrichtung weist zudem wenigstens einen ersten Temperatursensor und einen zweiten Temperatursensor auf.
Der Kern der Erfindung besteht darin, dass die Messeinrichtung einen Montagestab aufweist, auf welchem der wenigstens erste und zweite Temperatursensor in axialer Richtung des Montagestabs voneinander beabstandet angeordnet sind und welcher zu jeder Seite eines Temperatursensors in axialer Richtung jeweils ein Stützelement aufweist. Dabei ist der Montagestab zwischen den Stützelementen derart federnd ausgebildet, dass jeder der Temperatursensoren mit einer definierten Anpresskraft an eine Innenwand der Ausnehmung anlegbar ist.
Vorteilhaft ist hierbei, dass durch die Messeinrichtung die Temperatur über die komplette Länge der Walzenoberfläche ermittelt werden kann. Dabei ist die Auflösung der Messgenauigkeit abhängig von der Anzahl der Sensoren und deren Abstand zueinander. Durch die erzeugte Anpresskraft ist ein zuverlässiger mechanischer Kontakt zwischen Temperatursensoreinheiten und Innenwand der Ausnehmung möglich. Hierdurch können zum einen Unebenheiten der Ausnehmung, welche beispielsweise bei der Bohrung der Ausnehmung entstehen können, ausgeglichen werden, zum anderen ist hierdurch auch trotz beispielsweise Vibrationen im Betrieb der Walze eine zuverlässige Temperaturmessung möglich. Dies liegt darin begründet, dass ein zuverlässiger mechanischer Kontakt gleichbedeutend mit einer zuverlässigen thermischen Kopplung zwischen Innenwand der Ausnehmung, welche annähernd die Temperatur der Walzenoberfläche aufweist, und des jeweiligen Temperatursensors ist. Zudem kann die Messeinrichtung durch die erzeugte Anpresskraft und durch die entsprechenden Stützelemente als Gegenlage derartig in der Ausnehmung fixiert werden, dass die Messeinrichtung auch bei Betrieb der Walze ihre Position beibehält.

Eine vorteilhafte Ausgestaltung der Erfindung sieht vor, dass der Montagestab wenigstens zwischen den Stützelementen aus Stahl, insbesondere Federstahl, gebildet ist.
Vorteilhaft ist hierbei, dass Stahl eine passende Steifigkeit aufweist, um ein einfache Einsetzen der Messeinrichtung in die Ausnehmung zu ermöglichen, jedoch trotzdem entsprechend nachgiebig ist, um zusammen mit den Stützelementen im eingebauten Zustand eine ausreichende Anpresskraft auf die Temperatursensoreinheit zu erzeugen.

Eine weitere vorteilhafte Ausgestaltung der Erfindung sieht vor, dass die Stützelemente aus Stahl und/oder Kunststoff gebildet sind.

Vorteilhaft ist hierbei, dass solche Stützelemente günstig und einfach, beispielsweise mittels Spritzguss, herstellbar sind.

Gemäß einer vorteilhaften Ausgestaltung der Erfindung ist vorgesehen, dass die Messeinrichtung eine drahtlose Kommunikationseinheit, eine Energieversorgungseinheit und eine Verarbeitungseinheit aufweist, welche in einer stirnseitig an einem Ende des Montagestabs angebrachten Hülse angeordnet sind.
Vorteilhaft ist hierbei, dass die Hülse die elektronischen Bauteile gegenüber Umwelteinwirkungen von außen schützt. Hierdurch kann die Lebensdauer der Messeinrichtung verlängert werden.

Gemäß einer weiteren vorteilhaften Ausgestaltung der Erfindung ist vorgesehen, dass die Hülse als Stützelement ausgebildet ist.
Vorteilhaft ist hierbei, dass auf eines der Stützelemente am Ende des Montagestabs verzichten werden kann, wenn die Hülse sowieso bereits vorhanden und entsprechend ausgestaltet ist.

In einer vorteilhaften Ausführungsform ist vorgesehen, dass die Hülse einen ersten Querschnitt aufweist und derartig ausgestaltet ist, dass der erste Querschnitt einem zweiten Querschnitt der Ausnehmung entspricht.
Vorteilhaft ist hierbei, dass die Hülse die Ausnehmung dicht verschließt. Hierdurch können die Temperatursensoreinheiten beispielsweise vor Schmutz und Nässe von außerhalb geschützt werden.

In einer vorteilhaften Ausführungsform ist vorgesehen, dass wenigstens der erste Temperatursensor oder auch der zweite Temperatursensor einen Federkontakt und ein Temperatursensorelement umfassen, wobei der Temperatursensor jeweils derartig ausgestaltet ist, dass die Temperatur von der Innenwand der Ausnehmung mittels des Federkontakts an das Temperatursensorelement übertragbar ist.
Vorteilhaft ist hierbei, dass eine doppelte Federwirkung, zum einen mittels des Montagestabs und zum anderen mittels des Federkontakts, erzielt wird. Hierdurch kann der mechanische Kontakt zwischen Temperatursensor und Innenwand der Ausnehmung nochmals verbessert werden. Des Weiteren kann hierdurch die Lebensdauer der Temperatursensoren verlängert werden, da mechanische Belastungen ausgehend von dem Kontakt zwischen Innenwand der Ausnehmung und Temperatursensor mittels des Federkontakts reduziert werden können. Solche mechanischen Belastungen könnten ansonsten beispielsweise zu Rissen in der Leiterplatte des Temperatursensors und somit zu dessen Ausfall führen.

In einer vorteilhaften Ausführungsform ist vorgesehen, dass die Federkontakteeinheit ein Federelement aufweist, welches spiral-förmig oder s-förmig ausgestaltet ist.
Vorteilhaft ist hierbei, dass solch ein Federelement kostengünstig und unkompliziert hergestellt werden kann.

In einer vorteilhaften Ausführungsform ist vorgesehen, dass der Federkontakt zusätzlich ein Kontaktelement und ein Führungselement aufweist, wobei das Federelement zwischen dem Kontaktelement und dem
Temperatursensorelement angeordnet ist, und wobei das Führungselement derartig ausgestaltet ist, dass das Führungselement eine Führung für das Kontaktelement darstellt.
Vorteilhaft ist hierbei, dass die Richtung der Federwirkung durch das Führungselement entsprechend angepasst werden kann, um eine zuverlässige mechanische Kopplung zwischen Kontaktelement und Innenwand der Ausnehmung zu erzielen. Zudem kann durch das Kontaktelement die thermische Verbindung von der Innenwand der Ausnehmung zum Federelement und somit auch zum Temperatursensor verbessert werden.

### Zeichnungen

Fig. 1 zeigt ein Ausführungsbeispiel einer erfindungsgemäßen Messeinrichtung zur Ermittlung der Temperatur einer Walzenoberfläche.
Fig. 2 zeigt das Ausführungsbeispiel der erfindungsgemäßen Messeinrichtung zur Ermittlung der Temperatur einer Walzenoberfläche nach Fig. 1, welches in einer Ausnehmung eines Walzenkörpers eingesetzt ist.
Fig. 3 zeigt ein Ausführungsbeispiel eines erfindungsgemäßen Temperatursensors einer erfindungsgemäßen Messeinrichtung.
Fig. 4 zeigt das Ausführungsbeispiel des erfindungsgemäßen Temperatursensors nach Fig. 3 einer erfindungsgemäßen Messeinrichtung, wenn die Messeinrichtung in eine Ausnehmung eines Walzenkörpers eingesetzt ist.

### Beschreibung von Ausführungsbeispielen

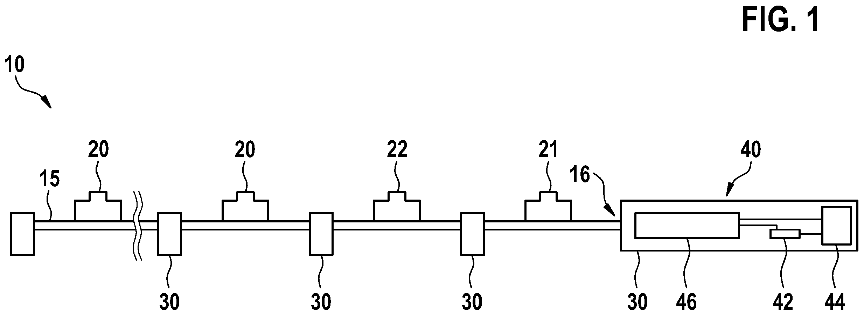

Fig. 1 zeigt ein Ausführungsbeispiel einer erfindungsgemäßen Messeinrichtung zur Ermittlung der Temperatur einer Walzenoberfläche.
Dargestellt ist eine Messeinrichtung 10, welche einen ersten Temperatursensor 21, einen zweiten Temperatursensor 22 sowie weitere Temperatursensoren 20 aufweist. Zudem weist die Messeinrichtung 10 einen Montagestab 15 auf. Die Temperatursensoren 20, 21 und 22 sind auf dem Montagestab 15 in axialer Richtung des Montagestabs 15 zueinander beabstandet angeordnet. Des Weiteren weist der Montagestab 15 Stützelemente 30 auf, welche ebenfalls in axialer Richtung beidseitig zu jedem Temperatursensor 20, 21 und 22 angeordnet sind. Die Messeinrichtung 10 weist des Weiteren eine Hülse 40 auf, welchem an einem Ende 16 des Montagestabs 15 stirnseitig am Montagestab 15 angebracht ist. In der Hülse 40 sind eine Verarbeitungseinheit 46, eine drahtlose Kommunikationseinheit 42 und eine Energieversorgungseinheit 44 angeordnet. Die Verarbeitungseinheit 46, kann beispielsweise ein Mikrocontroller sein. Die Verarbeitungseinheit 46 ist über ein nicht dargestelltes Kabel, beispielsweise ein BUS-Kabel, mit den Temperatursensoren 20, 21 und 22 verbunden, um Temperaturwerte von jedem der Temperatursensoren 20, 21 und 22 erfassen zu können. Des Weiteren ist die Verarbeitungseinheit 46 mit der Kommunikationseinheit 42 verbunden und dazu eingerichtet, die erfassten Temperaturwerte mittels der Kommunikationseinheit 42 auszusenden. Die Kommunikationseinheit 42 kann beispielsweise eine Bluetooth- oder WLAN-Einheit sein. Zusätzlich sind sowohl die Verarbeitungseinheit 46 als auch die Kommunikationseinheit 42 mit der Energieversorgungseinheit 44 verbunden. Die Energieversorgungseinheit 44 kann beispielsweise ein Energiespeicher, wie eine Batterie oder ein Akkumulator, sein. Alternativ oder auch als Kombination kann die Energieversorgungseinheit 44 als Energy-Harvesting- Einheit ausgestaltet sein beziehungsweise Energie von extern, beispielsweise induktiv, zugeführt bekommen.

In einem alternativen, bildlich nicht dargestellten Ausführungsbeispiel, kann die Messeinrichtung zusätzlich noch wenigstens einen Beschleunigungssensor aufweisen. Mittels vom Beschleunigungssensor erfassten Beschleunigungswerten kann dann beispielsweise auf einen Betriebszustand und eine Laufzeit der Walze oder auch auf einen Lagerzustand der Walze, wie beispielsweise eine Unwucht, geschlossen werden.

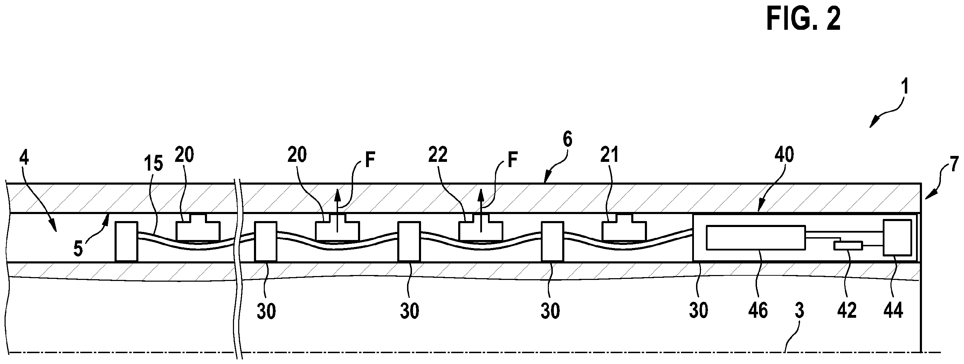

Fig. 2 zeigt das Ausführungsbeispiel der erfindungsgemäßen Messeinrichtung zur Ermittlung der Temperatur einer Walzenoberfläche nach Fig. 1, welches in einer Ausnehmung eines Walzenkörpers eingesetzt ist.
Dargestellt ist ein Walzenkörper 1. Der Walzenkörper 1 weist eine Rotationsachse 3, eine Walzenoberfläche 6 sowie eine Stirnseite 7 auf. An der Stirnseite 7 weist der Walzenkörper 1 eine Ausnehmung 4 auf. Solch eine Ausnehmung 4 kann beispielsweise eine Bohrung sein. Die Ausnehmung 4 verläuft insbesondere parallel zur Rotationsachse 3 des Walzenkörpers 1. Um die Temperatur der Walzenoberfläche 6 möglichst exakt zu ermitteln, ist die Ausnehmung 4 dabei zudem möglichst nah an der Walzenoberfläche 6 angeordnet, da hierdurch die Temperatur der Walzenoberfläche 6 in etwa mit der Temperatur einer Innenwand 5 der Ausnehmung 4 übereinstimmt. In die Ausnehmung 4 ist die Messeinrichtung 10, beispielsweise ausgestaltet nach Fig. 1, eingesetzt. Dabei ist der Montagestab 15 zwischen den Stützelementen 30 derart federnd ausgebildet ist, dass jede der Temperatursensoren 20, 21 und 22 mit einer definierten Anpresskraft F an die Innenwand 5 der Ausnehmung 4 angelegt wird. Die Stützelemente 30 wirken dabei als Gegenlage in entgegengesetzter Richtung zur Anpresskraft F. Somit stabilisiert sich die eingesetzte Messeinrichtung 10 anhand der Ausgestaltung von selbst und der Montagestab 15 ist wellenförmig verspannt. Die Anpresskraft F lässt sich zum einen anhand der Steifigkeit des Montagestabs 15 und zum anderen anhand dem Abstand zwischen den Stützelementen 30 einstellen. Insbesondere ist die Messeinrichtung 10 derartig in der Ausnehmung 4 eingesetzt, dass die Temperatursensoren 20, 21 und 22 in Richtung der Walzenoberfläche 6 und die Stützelemente 30 entsprechend in Richtung der Rotationsachse 3 des Walzenkörpers 1 gepresst werden. Die Hülse 40 der Messeinrichtung 10 ist zudem derartig ausgestaltet, dass sie als Stützelement 30 für die erste Temperatursensoreinheit 21 dient. Des Weiteren ist die Hülse 40 derartig ausgestaltet, dass diese die Ausnehmung 4 voll ausfüllt, also insbesondere ein erster Querschnitt der Hülse 40 einem zweiten Querschnitt der Ausnehmung 4 entspricht. Insbesondere schließt die Hülse 40 bündig mit der Stirnseite 7 des Walzenkörpers 1 ab und dichtet somit die Ausnehmung 4 gegenüber außen ab. In einem weiteren, bildlich nicht dargestellten Ausführungsbeispiel, kann auch ein Verschlusselement vorgesehen sein, welches die Ausnehmung 4 verschließt.

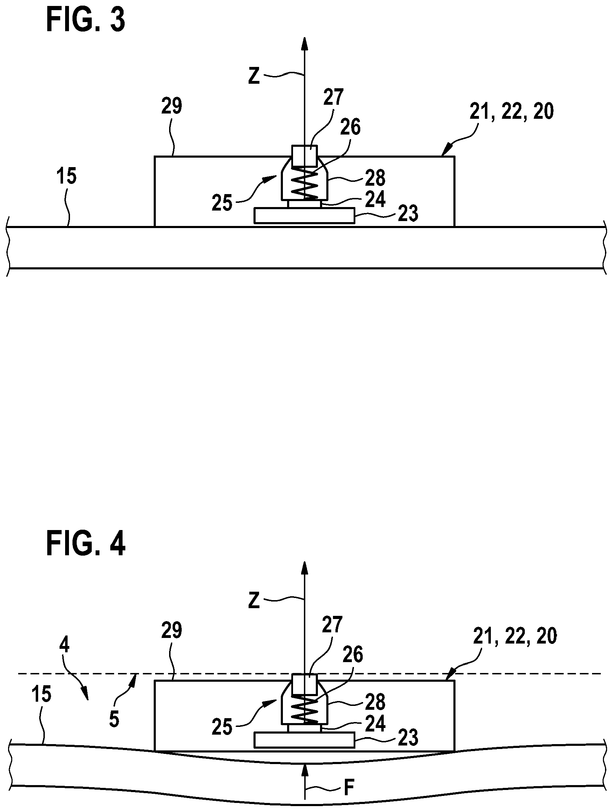

Fig. 3 zeigt ein Ausführungsbeispiel eines erfindungsgemäßen Temperatursensors einer erfindungsgemäßen Messeinrichtung.
Der Temperatursensor 20, 21 oder auch 22 ist entsprechend zur Fig. 1 auf dem Montagestab 15 angeordnet. Der Temperatursensor 20, 21 oder auch 22 weist ein optionales Gehäuse 29 auf. In dem Gehäuse 29 ist eine Leiterplatte 23 angeordnet, auf welchem wiederum ein Temperatursensorelement 24 angeordnet ist. Auf der Leiterplatte 23 kann zudem beispielsweise eine nicht dargestellte Auswerteschaltung integriert sein, welche zum Beispiel als Busfähiger Mikrocontroller mit einer individuellen Kennung ausgestaltet ist. Das Temperatursensorelement 24, beispielsweise ein Platin-Messwiderstand, ist über ein Federelement 26 mit einem Kontaktelement 27 verbunden. Das Federelement 26 ist spiralförmig. Alternativ ist allerdings auch eine s-förmige Ausgestaltung des Federelements 26 denkbar. Das Kontaktelement 27, das Federelement 26 und ein Führungselement 28 bilden einen Federkontakt 25. Dabei ist das Führungselement 28 derartig ausgestaltet, dass es eine Führung für das Kontaktelement 27 darstellt, welches dadurch nur entlang einer Achse z senkrecht zu einer Ebene der Leiterplatte 23 bewegbar ist. Entlang der Achse z verläuft auch die in Fig. 2 gezeigte Anpresskraft F.

Fig. 4 zeigt das Ausführungsbeispiel des erfindungsgemäßen Temperatursensors nach Fig. 3 einer erfindungsgemäßen Messeinrichtung, wenn die Messeinrichtung in eine Ausnehmung eines Walzenkörpers eingesetzt ist.
Dargestellt ist ein Temperatursensor 20, 21, oder auch 22 nach der Fig. 3. Durch die Anpresskraft F, welche durch den Montagestab 15 und nicht dargestellte Stützelemente 30 erzeugt wird, wird die Temperatursensoreinheit 20, 21 oder auch 22 an die Innenwand 5 der Ausnehmung 4 angelegt. Dadurch steht das Kontaktelement 27 des Federkontakts 25 mit der Innenwand 5 in Verbindung und kann die Temperatur von dieser über das Federelement 26 an das Temperatursensorelement 24 übertragen. Aus diesem Grund sollten insbesondere das Kontaktelement 27 und das Federelement 26 ein Material mit guter Wärmeleitfähigkeit aufweisen.

In einem alternativen, bildlich nicht dargestellten Ausführungsbeispiel, weist der Federkontakt 25 lediglich ein Federelement 26 auf, welches die Temperatur von der Innendwand 5 der Ausnehmung 4 direkt an das Temperatursensorelement 24 überträgt.

## Patentansprüche

1. Messeinrichtung (10) zur Ermittlung der Temperatur einer Walzenoberfläche (6) eines Walzenkörpers (1), wobei die Messeinrichtung (10) in eine Ausnehmung (4) des Walzenkörpers (1) einsetzbar ist, und wobei die Messeinrichtung (10) wenigstens einen ersten Temperatursensor (21) und einen zweiten Temperatursensor (22) aufweist,
**dadurch gekennzeichnet, dass**
die Messeinrichtung (10) einen Montagestab (15) aufweist, auf welchem der wenigstens erste und zweite Temperatursensor (21, 22) in axialer Richtung des Montagestabs (15) voneinander beabstandet angeordnet sind und welcher zu jeder Seite eines Temperatursensors (21, 22) in axialer Richtung jeweils ein Stützelement (30) aufweist, wobei der Montagestab (15) zwischen den Stützelementen (30) derart federnd ausgebildet ist, dass jeder der Temperatursensoren (21, 22) mit einer definierten Anpresskraft (F) an eine Innenwand (5) der Ausnehmung (4) anlegbar ist.

2. Messeinrichtung (10) nach Anspruch 1, **dadurch gekennzeichnet, dass** der Montagestab (15) wenigstens zwischen den Stützelementen (30) aus Stahl, insbesondere Federstahl, gebildet ist.

3. Messeinrichtung (10) nach einem der Ansprüche 1 oder 2, **dadurch gekennzeichnet, dass** die Stützelemente (30) aus Stahl und/oder Kunststoff gebildet sind.

4. Messeinrichtung (10) nach einem der vorhergehenden Ansprüche, **dadurch gekennzeichnet, dass** die Messeinrichtung (10) eine drahtlose Kommunikationseinheit (42), eine Energieversorgungseinheit (44) und eine Verarbeitungseinheit (46) aufweist, welche in einer stirnseitig an einem Ende (16) des Montagestabs (15) angebrachten Hülse (40) angeordnet sind.

5. Messeinrichtung (10) nach Anspruch 4, **dadurch gekennzeichnet, dass** die Hülse (40) als Stützelement (30) ausgebildet ist.

6. Messeinrichtung (10) nach einem der Ansprüche 4 oder 5, **dadurch gekennzeichnet, dass** die Hülse (40) einen ersten Querschnitt aufweist und derartig ausgestaltet ist, dass der erste Querschnitt einem zweiten Querschnitt der Ausnehmung (4) entspricht.

7. Messeinrichtung (10) nach einem der vorhergehenden Ansprüche, **dadurch gekennzeichnet, dass** wenigstens der erste Temperatursensor (21) und/oder der zweite Temperatursensor (22) einen Federkontakt (25) und ein Temperatursensorelement (24) umfassen, wobei der Temperatursensor (21, 22) jeweils derartig ausgestaltet ist, dass die Temperatur von der Innenwand (5) der Ausnehmung (4) mittels des Federkontakts (25) an das Temperatursensorelement (24) übertragbar ist.

8. Messeinrichtung nach dem vorherigen Anspruch 7, **dadurch gekennzeichnet, dass** der Federkontakt (25) ein Federelement (26) aufweist, welches spiral-förmig oder s-förmig ausgestaltet ist.

9. Messeinrichtung nach einem der Ansprüche 8, **dadurch gekennzeichnet, dass** der Federkontakt (25) zusätzlich ein Kontaktelement (27) und ein Führungselement (28) aufweist, wobei das Federelement (26) zwischen dem Kontaktelement (27) und dem Temperatursensorelement (24) angeordnet ist, und wobei das Führungselement (28) derartig ausgestaltet ist, dass das Führungselement (28) eine Führung für das Kontaktelement (27) darstellt.

## Claims

1. Measuring device (10) for determining the temperature of a roller surface (6) of a roller body (1), wherein the measuring device (10) can be inserted into a recess (4) in the roller body (1), and wherein the measuring device (10) has at least a first temperature sensor (21) and a second temperature sensor (22),
**characterized in that**
the measuring device (10) has a mounting rod (15), on which at least the first and the second temperature sensor (21, 22) are arranged spaced apart from one another in the axial direction of the mounting rod (15) and which respectively has a support element (30) on each side of a temperature sensor (21, 22) in the axial direction, wherein the mounting rod (15) is embodied in a sprung fashion between the support elements (30) such that each of the temperature sensors (21, 22) can be applied with a defined pressing force (F) to an inner wall (5) of the recess (4).

2. Measuring device (10) according to Claim 1, **characterized in that** the mounting rod (15) is formed, at least between the support elements (30), from steel, in particular spring steel.

3. Measuring device (10) according to one of Claims 1 and 2, **characterized in that** the support elements (30) are formed from steel and/or plastic.

4. Measuring device (10) according to one of the preceding claims, **characterized in that** the measuring device (10) has a wireless communication unit (42), an energy supply unit (44) and a processing unit (46) which are arranged in a sleeve (40) which is mounted at a front side on an end (16) of the mounting rod (15).

5. Measuring device (10) according to Claim 4, **characterized in that** the sleeve (40) is embodied as a support element (30).

6. Measuring device (10) according to one of Claims 4 and 5, **characterized in that** the sleeve (40) has a first cross section and is configured in such a way that the first cross section corresponds to a second cross section of the recess (4).

7. Measuring device (10) according to one of the preceding claims, **characterized in that** at least the first temperature sensor (21) and/or the second temperature sensor (22) comprise/comprises a spring force (25) and temperature sensor element (24), wherein the temperature sensor (21, 22) is respectively configured in such a way that the temperature of the inner wall (5) of the recess (4) can be transmitted to the temperature sensor element (24) by means of the spring contact (25).

8. Measuring device according to the preceding Claim 7, **characterized in that** the spring contact (25) has a spring element (26) which is configured in a spiral shape or S shape.

9. Measuring device according to one of Claims 8, **characterized in that** the spring contact (25) additionally has a contact element (27) and a guide element (28), wherein the spring element (26) is arranged between the contact element (27) and the temperature sensor element (24), and wherein the guide element (28) is configured in such a way that the guide element (28) constitutes a guide for the contact element (27).

## Revendications

1. Dispositif de mesure (10) permettant de déterminer la température d'une surface de cylindre (6) d'un corps de cylindre (1), le dispositif de mesure (10) pouvant être inséré dans un évidement (4) du corps de cylindre (1), et le dispositif de mesure (10) comprenant au moins un premier capteur de température (21) et un deuxième capteur de température (22),
**caractérisé en ce que**
le dispositif de mesure (10) comprend une barre de montage (15), sur laquelle ledit au moins un premier et deuxième capteur de température (21, 22) sont disposés à distance l'un de l'autre dans la direction axiale de la barre de montage (15) et laquelle comprend respectivement un élément de support (30) de chaque côté d'un capteur de température (21, 22) dans la direction axiale, la barre de montage (15) étant configurée à ressort entre les éléments de support (30), de telle sorte que chacun des capteurs de température (21, 22) puisse être appliqué contre une paroi intérieure (5) de l'évidement (4) avec une force de pression (F) définie.

2. Dispositif de mesure (10) selon la revendication 1, **caractérisé en ce que** la barre de montage (15) est formée en acier, notamment en acier à ressort, au moins entre les éléments de support (30).

3. Dispositif de mesure (10) selon l'une quelconque des revendications 1 ou 2, **caractérisé en ce que** les éléments de support (30) sont formés en acier et/ou en matière plastique.

4. Dispositif de mesure (10) selon l'une quelconque des revendications précédentes, **caractérisé en ce que** le dispositif de mesure (10) comprend une unité de communication sans fil (42), une unité d'alimentation en énergie (44) et une unité de traitement (46), qui sont agencées dans un manchon (40) disposé sur le côté frontal à une extrémité (16) de la barre de montage (15) .

5. Dispositif de mesure (10) selon la revendication 4, **caractérisé en ce que** le manchon (40) est configuré sous la forme d'un élément de support (30).

6. Dispositif de mesure (10) selon l'une quelconque des revendications 4 ou 5, **caractérisé en ce que** le manchon (40) présente une première section transversale et est conçu de telle sorte que la première section transversale corresponde à une deuxième section transversale de l'évidement (4).

7. Dispositif de mesure (10) selon l'une quelconque des revendications précédentes, **caractérisé en ce qu'**au moins le premier capteur de température (21) et/ou le deuxième capteur de température (22) comprennent un contact à ressort (25) et un élément de capteur de température (24), le capteur de température (21, 22) étant à chaque fois conçu de telle sorte que la température puisse être transférée à partir de la paroi intérieure (5) de l'évidement (4) au moyen du contact à ressort (25) vers l'élément de capteur de température (24) .

8. Dispositif de mesure selon la revendication 7 précédente, **caractérisé en ce que** le contact à ressort (25) comprend un élément de ressort (26), qui est conçu en forme de spirale ou en forme de s.

9. Dispositif de mesure selon l'une quelconque des revendications 8, **caractérisé en ce que** le contact à ressort (25) comprend en outre un élément de contact (27) et un élément de guidage (28), l'élément de ressort (26) étant agencé entre l'élément de contact (27) et l'élément de capteur de température (24), et l'élément de guidage (28) étant conçu de telle sorte que l'élément de guidage (28) constitue un guidage pour l'élément de contact (27).
